# EUROPEAN PATENT APPLICATION

(11) **EP 4 397 407 A1**
(43) Date of publication of application: **10.07.2024**
(21) Application number: 22864500.8
(22) Date of filing: 29.08.2022
(51) Int. Cl.: B01J 23/83, B01J 35/10, C01B 7/04

(54) **HYDROCHLORIC ACID OXIDATION CATALYST AND METHOD FOR PRODUCING CHLORINE**

(30) Priority: 03.09.2021 JP 2021144292
(71) Applicant: Mitsui Chemicals, Inc., Tokyo 104-0028 (JP)
(72) Inventor: NIISHIRO, Ryo, Sodegaura-shi, Chiba 299-0265 (JP); NAKAGAWA, Yusuke, Sodegaura-shi, Chiba 299-0265 (JP); SONE, Hideki, Sodegaura-shi, Chiba 299-0265 (JP); OGAWA, Miku, Sodegaura-shi, Chiba 299-0265 (JP)
(74) Representative: Hoffmann Eitle
(86) International application number: PCT/JP2022/032411
(87) International publication number: WO 2023/032918

(57) **Abstract**

A hydrochloric acid oxidation catalyst oxidizes hydrochloric acid. The hydrochloric acid oxidation catalyst includes a carrier, and copper, an alkali metal, and a rare earth element that are carried by the carrier. A differential value of a spectrum obtained by differential thermal analysis of the hydrochloric acid oxidation catalyst is 0.035 µV/sec or less relative to a baseline in the range of 290 to 400°C.

## Description

### TECHNICAL FIELD

The present invention relates to a hydrochloric acid oxidation catalyst and a method for producing chlorine. More particularly, the present invention relates to a hydrochloric acid oxidation catalyst for oxidizing hydrochloric acid, and a method for producing chlorine using the catalyst.

### BACKGROUND ART

Hydrochloric acid oxidation catalysts are conventionally used to oxidize hydrochloric acid with oxygen to produce chlorine.

For example, a hydrochloric acid oxidation catalyst in which copper, potassium and samarium are dispersed in silica has been proposed (see, for example, Patent Document 1 below).

### Citation List

### Patent Document

Patent Document 1: WO 2009/041384

### SUMMARY OF THE INVENTION

### PROBLEM TO BE SOLVED BY THE INVENTION

However, the hydrochloric acid oxidation catalyst described in Patent Document 1 significantly reduces catalytic activity after long-term use, resulting in a lower yield of chlorine.

The present invention provides a hydrochloric acid oxidation catalyst and a method for producing chlorine that are capable of suppressing reduction of catalytic activity even after long-term use, resulting in suppressing lowering of the yield of chlorine.

### MEANS FOR SOLVING THE PROBLEM

The present invention (1) includes a hydrochloric acid oxidation catalyst for oxidizing hydrochloric acid, the catalyst including a carrier, and copper, an alkali metal, and a rare earth element that are carried by the carrier, in which a differential value of a spectrum obtained by differential thermal analysis of the hydrochloric acid oxidation catalyst under the following measurement conditions is 0.035 µV/sec or less relative to a baseline in a range of 290 to 400°C.

### Measurement conditions

Reference material: α Alumina
Atmosphere: Nitrogen (200 mL/min)
Sample amount: 10 mg
Rate of temperature increase: 15 °C/sec
Data sampling time: 2 seconds

The present invention (2) includes the hydrochloric acid oxidation catalyst described in (1), in which an average pore diameter (4V/A) determined by a BET method by a nitrogen adsorption method is 5 nm or more and 30 nm or less.

The present invention (3) includes the hydrochloric acid oxidation catalyst described in (1) or (2), in which the carrier contains alumina.

The present invention (4) includes a method for producing chlorine, in which hydrochloric acid is brought into contact with oxygen in the presence of the hydrochloric acid oxidation catalyst described in (1) or (2).

The present invention (5) includes the method for producing chlorine described in (4), in which the hydrochloric acid oxidation catalyst is used as a fixed-bed catalyst.

### EFFECTS OF THE INVENTION

The hydrochloric acid oxidation catalyst and the method for producing chlorine according to the present invention can suppress reduction of catalytic activity even after long-term use, resulting in suppressing lowering of the yield of chlorine.

### BRIEF DESCRIPTION OF THE DRAWINGS

FIG. 1 shows a graph of a differential value of a spectrum obtained by differential thermal analysis of the catalyst in Example 1 versus temperature.
FIG. 2 shows a graph of a differential value of a spectrum obtained by differential thermal analysis of the catalyst in Example 2 versus temperature.
FIG. 3 shows a graph of a differential value of a spectrum obtained by differential thermal analysis of the catalyst in Comparative Example 1 versus temperature.
FIG. 4 shows a schematic cross-sectional view of a fixed-bed catalytic reactor in Use Examples and Comparative Use Example.

### DESCRIPTION OF THE EMBODIMENTS

### [Hydrochloric acid oxidation catalyst]

The hydrochloric acid oxidation catalyst of the present invention is a catalyst for oxidizing hydrochloric acid. The hydrochloric acid oxidation catalyst is hereinafter simply referred to as catalyst.

### [Properties of catalyst]

The catalyst has a particulate shape. That is, the catalyst is composed of many particles. The particulate shape includes particle shapes and granular shapes. The shape and size of the particles are not limited.

The catalyst has pores. An average pore diameter (4V/A) determined by a BET method by a nitrogen adsorption method is, for example, 1 nm or more, preferably 5 nm or more, and for example, 100 nm or less, preferably 30 nm or less. When the average pore diameter (4V/A) is the above-described lower limit or more, it is possible to suppress slowing down of diffusion and transfer of reactants and products. When the average pore diameter (4V/A) is the above-described upper limit or less, it is possible to suppress lowering of chances for reactants and products to contact the surface of the catalyst while diffusion is made faster. Details of the BET method by the nitrogen adsorption method are described in Example to be described later.

### [Carrier, copper, alkali metal, rare earth element]

This catalyst includes a carrier, and copper, an alkali metal, and a rare earth element (active components).

### [Carrier]

The carrier maintains the shape of the catalyst. The carrier has the same average pore diameter as the above-described catalyst. Examples of a material of the carrier include alumina, silica alumina, titania, and zirconia. The carrier preferably contains alumina in view of extending catalyst life. To be specific, examples of such carrier include alumina and silica alumina. The ratio of alumina in the silica alumina is, for example, 1% by mass or more, preferably 5% by mass or more, and 75% by mass or less, preferably 45% by mass or less, more preferably 25% by mass or less.

If the carrier contains alumina, the catalyst can suppress dissipation (volatilization) of the active components by interaction between the alumina and the active components even though the catalyst is used for a long term. Therefore, the catalyst life can be extended. It is assumed that the dissipation (volatilization) of the above-described active components is due to melting of the active components, which are solid under 23°C and 101325 Pa (normal temperature and normal pressure), at high operating temperatures (including a range of 290 to 400°C). The melting is observed by DDTA to be described later.

For the material of the carrier, more preferably, alumina is used.

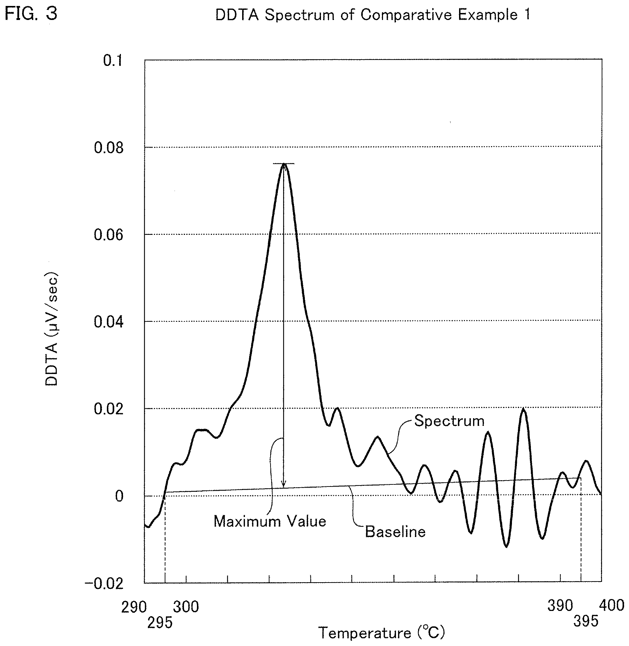

On the other hand, silica may be not suitable as the material of the carrier in view of extending the above-described catalyst life. If the material of the carrier is silica, the interaction between the silica and the active components is likely to remarkably weaken, and the dissipation (volatilization) of the active components may not be suppressed. Thus, the melting of the above-described active components may be clearly observed by DDTA even at temperatures from 290 to 400°C (see Comparative Example 1 and FIG. 3).

### [Active components]

Copper, an alkali metal, and a rare earth element are active components of the catalyst and are dispersed in (carried by) the carrier. The copper, alkali metal, and rare earth element are present in solid state on the surface of the carrier. The copper, alkali metal, and rare earth element, and a combination thereof are described in detail in, for example, WO 2009/041384.

Examples of the alkali metal include lithium, sodium, potassium, rubidium, cesium and francium, and preferably, potassium is used.

Examples of the rare earth element include 17 kinds including scandium, yttrium, and lanthanoid (15 kinds). Preferably, lanthanoid is used, more preferably, praseodymium, neodymium, lanthanum, europium, and samarium are used, further preferably, samarium is used.

The ratio of each of the copper, alkali metal, and rare earth element in the catalyst is, for example, 1% by mass or more and 25% by mass or less. The ratio of the total amount of the copper, alkali metal, and rare earth element in the catalyst is, for example, 5% by mass or more and 50% by mass or less. The mass ratio of the alkali metal relative to 100 parts by mass of the copper is, for example, 20 parts by mass or more, preferably 30 parts by mass or more, and for example, 200 parts by mass or less, preferably 180 parts by mass or less. The mass ratio of the rare earth element relative to 100 parts by mass of the copper is, for example, 20 parts by mass or more, preferably 30 parts by mass or more, and for example, 350 parts by mass or less, preferably 300 parts by mass or less.

When the mass ratio of the rare earth element relative to 100 parts by mass of the copper is the above-described upper limit or less, the durability of the catalyst can be improved.

### [Differential value of spectrum of differential thermal analysis of catalyst]

A differential value of a spectrum obtained by differential thermal analysis of the catalyst is 0.035 µV/sec or less relative to a baseline in the range of 290 to 400°C.

When the differential value exceeds 0.035 µV/sec, the dissipation (volatilization) of the above-described active components is not suppressed in a long-term use of the catalyst, failing to suppress lowering of the yield of chlorine. In particular, when the catalyst is used in a fixed bed, movement of a hot spot cannot be suppressed due to the long-term use of the catalyst, and as a result, lowering of the yield of chlorine cannot be suppressed.

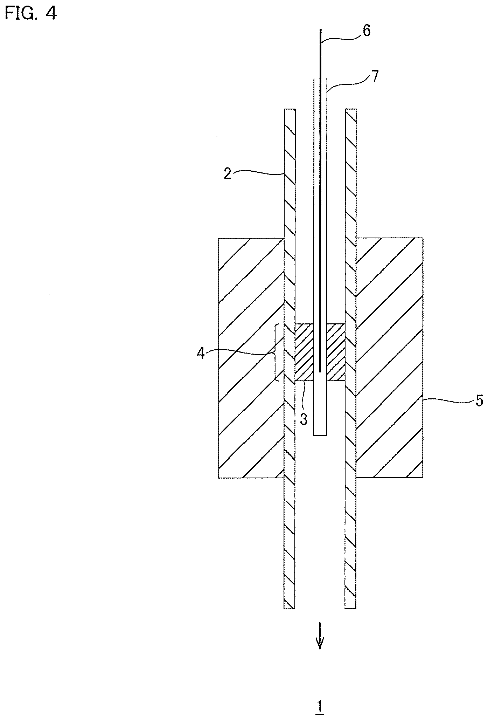

As shown in FIG. 4, the hot spot is a high temperature point based on the catalytic activity in the hydrochloric acid oxidation reaction in a catalytic region 4 formed in a fixed-bed catalytic reactor 1 in which a catalyst 3 is provided as a fixed bed. The catalytic region 4 is along a flow direction of chlorine and oxygen.

The movement of the hot spot is that the above-described high temperature point moves downstream in the flow direction. The high temperature point is a portion of the highest catalytic activity in the catalytic region 4. A high temperature point at an initial use of the catalyst is usually located in a generally central portion of the catalytic region 4 in the flow direction. The above-described movement reduces the catalytic activity in the portion that has been the high temperature point at the initial use of the catalyst due to dissipation (volatilization) of the active components after long-term use of the catalyst or other factors, which leads to decrease of the temperature. Due to the long-term use of the catalyst, the high temperature point gradually shifts from the initial high temperature point to the downstream in the flow direction, and the high temperature point finally reaches the downstream end of the catalytic region 4 in the flow direction, and then does not move any further, resulting in remarkable reduction of the catalytic activity in the entire catalytic region 4. Therefore, suppressing the movement of the hot spot means that the remarkable reduction of the catalytic activity in the entire catalytic region 4 can be suppressed.

When the above-described differential value exceeds 0.035 µV/sec, the spectrum of the differential thermal analysis has a high melting peak. The melting peak is assumed to cause dissipation (volatilization) of the active components, which means remarkable reduction of the catalytic activity of the catalyst.

In contrast, the differential value is preferably 0.030 µV/sec or less, more preferably 0.025 µV/sec or less, further preferably 0.020 µV/sec or less, particularly preferably 0.015 µV/sec or less. When the differential value is the above-described upper limit or less, the dissipation (volatilization) of the above-described active components is sufficiently suppressed, resulting in securely suppressing lowering of the yield of chlorine. In addition, the movement of the hot spot when the catalyst is used in the fixed bed can be further suppressed, resulting in suppressing remarkable reduction of the catalytic activity.

The differential thermal analysis is performed under the following measurement conditions.

### Measurement conditions

Reference material: α Alumina
Atmosphere: Nitrogen (200 mL/min)
Sample amount: 10 mg
Rate of temperature increase: 15 °C/sec
Data sampling time: 2 seconds

The differential value of the spectrum of the differential thermal analysis of the catalyst is acquired as a DDTA spectrum of the catalyst.

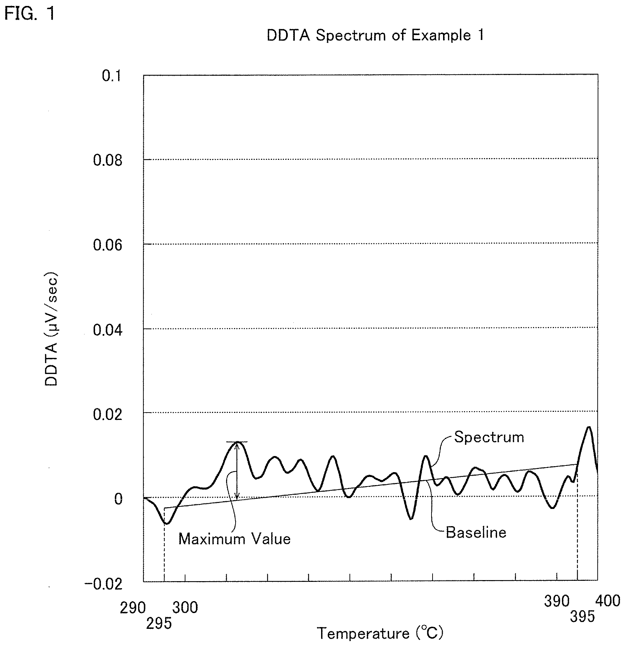

The baseline is a straight line connecting between the average (unit: µV/sec) of the differential values of the spectrum from 290°C to 300°C, corresponding to 295°C, and the differential value (unit: µV/sec) of the spectrum from 390°C to 400°C, corresponding to 395°C (see FIGS. 1 to 3).

The differential value is a length from the above-described baseline to the differential curve of the spectrum at temperatures from 290 to 400°C.

In the present invention, the maximum value of the differential values of the differential curve of the spectrum at temperatures from 290 to 400°C from the baseline can also be referred to as 0.035 µV/sec or less.

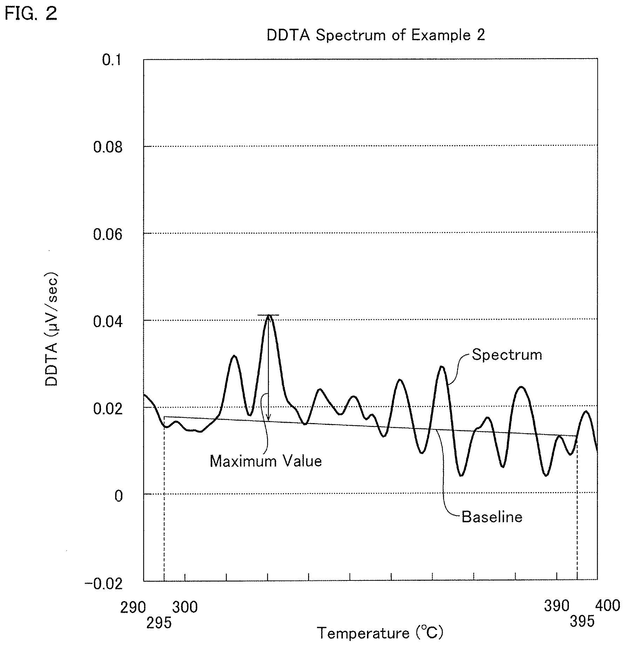

More preferably, the spectrum at temperatures from 290 to 400°C includes noise as in Examples 1 and 2 shown in FIGS. 1 and 2, respectively, but includes no distinct peak as in Comparative Example 1 shown in FIG. 3.

The maximum value of the above-described differential value is determined according to the following procedures [1] to [3].

Procedure [1] Acquire a DDTA spectrum by differential thermal analysis of the above-described catalyst.

Procedure [2] Draw the above-described baseline on the chart based on the DDTA spectrum.

Procedure [3] Identify the DDTA spectrum that is the longest distance from the baseline, and acquire such distance as a local maximum value (µV/sec).

### [Method for producing catalyst, oxidation of hydrochloric acid]

Next, a method for producing the catalyst is described.

First, a carrier and active components (copper, alkali metal, and rare earth element) are prepared.

The active components are prepared as an active component-containing aqueous solution containing, for example, compounds such as chlorides thereof and oxides thereof. The active component-containing aqueous solution contains acidic water (specifically, aqueous hydrochloric acid), and in the active component-containing aqueous solution, the above-described compounds are dissolved in the acidic water.

Thereafter, the carrier and the active component-containing aqueous solution are blended, followed by heating and drying. Prior to heating, as necessary, the pressure of the atmosphere can be reduced.

Then, a particulate catalyst is obtained in which the active components are dispersed in the carrier.

### [Use of catalyst]

The catalyst is used, for example, in any of a batch type and a flow type (fixed bed, fluidized bed, and moving bed), preferably in a flow type, more preferably in a fixed bed.

For example, a fixed-bed reactor is filled with the catalyst.

To oxidize hydrochloric acid using the catalyst, for example, hydrochloric acid is brought into contact with oxygen in the above-described reactor. When the catalyst is used in a fixed bed, the supply rates of hydrochloric acid and oxygen are not limited. The oxidation of hydrochloric acid produces chlorine. Therefore, in the method for producing chlorine, hydrochloric acid is brought into contact with oxygen in the presence of the hydrochloric acid oxidation catalyst.

In this manner, hydrochloric acid is oxidized by oxygen to produce chlorine (production of chlorine) and also produce water as byproduct.

### [Effects]

The differential value of the spectrum obtained by the differential thermal analysis of the catalyst under the above-described conditions is 0.035 µV/sec or less relative to the baseline in the range of 290 to 400°C. This means that melting of the active components (copper, alkali metal, and rare earth element) carried by the carrier in the range of 290 to 400°C is suppressed. Therefore, this catalyst can suppress lowering of the yield of chlorine even after long-term use.

When the average pore diameter of the catalyst is 5 nm or more and 30 nm or less, a reaction field is formed where reactants and products can easily diffuse and transfer, and high chlorine yield can be obtained.

When the carrier in this catalyst contains alumina, the interaction between the alumina and the active components can suppress dissipation (volatilization) of the active components, so that the catalyst life can be extended.

In particular, when the catalyst is used in a fixed bed, the movement of the hot spot can be suppressed even after long-term use of the catalyst, and as a result, lowering of the yield of chlorine can be suppressed.

### [Modification]

As necessary, the catalyst can be heated (pretreated and calcined) at high temperatures. Heating is performed under ambient atmosphere or under an oxygen-nitrogen gas mixture atmosphere. The heating temperature is, for example, 200°C or more, preferably 300°C or more, and for example, 600°C or less, preferably 500°C or less. The heating time is, for example, 1 hour or more, preferably 2 hours or more, and for example, 10 hours or less, preferably 5 hours or less.

### Example

Hereinafter, the present invention will be described more in detail with reference to Examples and Comparative Examples, but not limited thereto. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF THE EMBODIMENTS." "Parts" and "%" are based on mass unless otherwise specified in the following.

### Example 1

According to the formulations listed in Table 1, water, active components, and aqueous hydrochloric acid were mixed to prepare an active component-containing aqueous solution.

Thereafter, the active component-containing aqueous solution was mixed with a spherical carrier made of alumina according to the formulations listed in Table 1. The mixture was then subjected to depressurization, temperature increase, drying, and cooling under the conditions shown in Table 2 to produce a catalyst. The ratios (mass %) of the active components (copper, potassium, and samarium) in the catalyst are shown in Table 3.

### Example 2 and Comparative Example 1

The catalyst was produced in the same manner as in Example 1, except that the ratios of the active components in the active component-containing aqueous solution and the type of the carrier were changed so as to achieve the ratios of the active components listed in Table 3.

### <Evaluation>

The following items were evaluated for each of the catalysts in Examples 1 and 2 and Comparative Example 1. These results are shown in Table 3.

### (Average pore diameter of catalyst)

The average pore diameter (4V/A) of the catalyst was determined by a BET method by a nitrogen adsorption method. The catalyst was previously calcined in an electric furnace at 200°C for 3 hours under ambient atmosphere, and was then filled into a measuring vessel of a measurement device. The measurement device and measurement conditions are as follows.

Measurement device: BERSORP-MAX (manufactured by MicrotracBEL Corp.)
Measurement conditions: Pretreatment: 30°C, 1 kPa, 4 hours. Measurement temperature: -196°C

### (Calculation of maximum differential value of spectrum of differential thermal analysis)

The differential value of the spectrum obtained by the differential thermal analysis of the catalyst was determined. That is, the DDTA spectrum of the catalyst was acquired. The measurement device and measurement conditions are as follows.

Measurement device: TG-DTA TG8120 (manufactured by Rigaku Corporation)

### Measurement conditions:

Reference material: α Alumina
Atmosphere: Nitrogen (200 mL/min)
Sample amount: 10 mg
Rate of temperature increase: 15 °C/sec
Data sampling time: 2 seconds

The DDTA spectrum of the catalyst in Example 1 is shown in FIG. 1. The DDTA spectrum of the catalyst in Example 2 is shown in FIG. 2. The DDTA spectrum of the catalyst in Comparative Example 1 is shown in FIG. 3.

### <Use Examples and Comparative Test Example>

Each of the catalysts of Examples 1, 2 and Comparative Example 1 was brought into contact with chlorine and oxygen while heating to produce hydrochloric acid.

In detail, as shown in FIG. 4, a straight tube (an example of the reactor) 2 having a diameter of 1.6 cm was filled with 6 mL (apparent volume) of the catalyst 3 to create the catalytic region 4. The length of the catalytic region 4 (length in the direction in which the straight tube 2 extended) was 3 cm. In this manner, the fixed-bed catalytic reactor 1 equipped with the straight tube 2, the catalyst 3, a thermocouple 6, and a sheath tube 7 was produced. The thermocouple 6 can measure the temperature of the catalyst 3. The thermocouple 6 is movable in the up-down direction with respect to the straight tube 2. The sheath tube 7 protects the thermocouple 6. The sheath tube 7 has a bottomed cylindrical shape. The sheath tube 7 has an outer diameter of 0.4 mm.

In the fixed-bed catalytic reactor 1, the catalytic region 4 was disposed in the longitudinal center of the straight tube 2.

The fixed-bed catalytic reactor 1 was provided with a heating furnace 5 that accommodated the catalytic region 4 inside. The heating furnace 5 is an electric furnace capable of controlling temperature. The heating furnace 5 is programmed to increase the temperature inside the heating furnace 5 so that when the temperature of the catalyst 3 decreases during use from the initial set temperature at the start of use, the catalyst 3 has the same temperature as the initial set temperature at the start of use.

Hydrochloric acid and oxygen were each flowed through the fixed-bed catalytic reactor 1 at a rate of 45 mL/min from the upper end portion to the lower end portion of the fixed-bed catalytic reactor 1. The temperature of the heating furnace 5 was set so that the temperature of the catalyst 3 reached the reaction temperature listed in Table 4.

Then, the yield of chlorine was determined after an elapse of 50 hours and 1500 hours. The yield of chlorine was determined based on the description in WO 2009/041384.

### <Evaluation of Use Examples and Comparative Use Example>

The following items were evaluated for Use Examples 1 to 5 and Comparative Use Example 1. The results are shown in Table 4.

### <Movement of hot spot>

The presence or absence of the movement of the hot spot to the lower side (downstream in the flow direction) and its movement distance were determined by moving the thermocouple 6 in the up-down direction to measure the temperature distribution of the catalyst 3.

### <Difference in set temperature of heating furnace>

The difference between the heating furnace set temperature for 50 hour-use and that for 1500 hour-use was determined.

A large difference means a large decrease in catalytic activity after 1500 hours of use.

### [Table 1]

**TABLE 1**

| Formulation of catalyst | | [pts. mass] |
|---|---|---|
| Active component-containing aqueous solution | Distilled water | 36.2 |
| | 35%HCl | 9.7 |
| | Sm₂O₃ | 3.1 |
| | CuCl₂▪2H₂O | 7.2 |
| | KCl | 3.1 |
| Carrier | Alumina | 37.0 |
| | Silica | - |

### [Table 2]

**TABLE 2**

| Depressurization | Room temperature, 0.023 Mpa |
|---|---|
| Temperature increase | 90°C, 0.041 Mpa, 1 hr |
| Drying | 90°C, 0.023 Mpa, 2 hrs |
| Cooling | Room temperature, 0.023 Mpa, 0.5 hrs |

### [Table 3]

**TABLE 3**

| | Carrier | Cu (mass %) | K (mass %) | Sm (mass %) | Maximum differential value of spectrum of differential thermal analysis relative to baseline (µV/sec) | Average pore diameter (nm) |
|---|---|---|---|---|---|---|
| Ex. 1 | Alumina | 6 | 3.6 | 6 | 0.014 | 12 |
| Ex. 2 | Alumina | 5.5 | 3.3 | 11 | 0.025 | 12 |
| Comp. Ex. 1 | Silica | 7 | 4.2 | 7 | 0.074 | 23 |

### [Table 4]

**TABLE 4**

| Use Example of catalyst as fixed bed | Catalyst | Supply rate of hydrochloric acid (mL/min) | Supply rate of oxygen (mL/min) | Reaction temperature (°C) | Reaction time (h) | Chlorine yield (%) | Chlorine yield ratio | Hot spot | | Heating furnace set temperature (°C) | Difference in heating furnace set temperature (°C) |
|---|---|---|---|---|---|---|---|---|---|---|---|
| | | | | | | | | Moved/ Not moved | Movement distance (cm) | | |
| Use Example 1 | Ex. 1 | 45 | 45 | 360 | 50 | 51.6 | 0.99 | Not moved | | 358.5 | 0.0 |
| | Ex. 1 | | | | 1500 | 51.0 | | | | 358.5 | |
| Use Example 2 | Ex. 1 | 45 | 22.5 | 390 | 50 | 51.4 | 1.01 | Not moved | | 390.5 | 0.0 |
| | Ex. 1 | | | | 1500 | 52.1 | | | | 390.5 | |
| Use Example 3 | Ex. 1 | 45 | 22.5 | 415 | 50 | 65.6 | 0.98 | Not moved | | 414.9 | 0.2 |
| | Ex. 1 | | | | 1500 | 64.0 | | | | 415.1 | |
| Use Example 4 | Ex. 2 | 45 | 22.5 | 350 | 50 | 55.3 | 0.99 | Not moved | | 339.5 | -1.0 |
| | Ex. 2 | | | | 1500 | 54.5 | | | | 338.5 | |
| Use Example 5 | Ex. 2 | 45 | 22.5 | 390 | 50 | 69.7 | 1.00 | Not moved | | 390.0 | -1.0 |
| | Ex. 2 | | | | 1500 | 69.4 | | | | 389.0 | |
| Comparative Use Example 1 | Comp. Ex. 1 | 90 | 90 | 360 | 50 | 66.2 | 0.94 | Moved | 1.0 | 343.0 | 4.5 |
| | Comp. Ex. 1 | | | | 1500 | 62.5 | | | | 347.5 | |

While the illustrative embodiments of the present invention are provided in the above description, such is for illustrative purpose only and it is not to be construed restrictively. Modification and variation of the present invention that will be obvious to those skilled in the art is to be covered by the following claims.

### Industrial Applicability

The hydrochloric acid oxidation catalyst is used in the method for producing chlorine.

### Description of Reference Numerals

- 1: fixed-bed catalytic reactor
- 3: catalyst

## Claims

1. A hydrochloric acid oxidation catalyst for oxidizing hydrochloric acid, the catalyst comprising
a carrier; and
copper, an alkali metal, and a rare earth element that are carried by the carrier,
wherein a differential value of a spectrum obtained by differential thermal analysis of the hydrochloric acid oxidation catalyst under the following measurement conditions is 0.035 µV/sec or less relative to a baseline in a range of 290 to 400°C.
Measurement conditions
Reference material: α Alumina
Atmosphere: Nitrogen (200 mL/min)
Sample amount: 10 mg
Rate of temperature increase: 15 °C/sec
Data sampling time: 2 seconds

2. The hydrochloric acid oxidation catalyst according to claim 1, wherein an average pore diameter (4V/A) determined by a BET method by a nitrogen adsorption method is 5 nm or more and 30 nm or less.

3. The hydrochloric acid oxidation catalyst according to claim 1, wherein the carrier contains alumina.

4. A method for producing chlorine, wherein hydrochloric acid is brought into contact with oxygen in the presence of the hydrochloric acid oxidation catalyst according to claim 1.

5. The method for producing chlorine according to claim 4, wherein the hydrochloric acid oxidation catalyst is used as a fixed-bed catalyst.
